(19) Europäisches Patentamt
European Patent Office
Office européen des brevets

(11) Veröffentlichungsnummer: **0 414 897 A1**

(12) **EUROPÄISCHE PATENTANMELDUNG**
veröffentlicht nach Art. 158 Abs. 3
EPÜ

(21) Anmeldenummer: 89907881.0

(22) Anmeldetag: 07.03.89

(86) Internationale Anmeldenummer:
PCT/SU89/00060

(87) Internationale Veröffentlichungsnummer:
WO 90/10607 (20.09.90 90/22)

(51) Int. Cl.5: **C04B 35/02, C04B 35/68**

(43) Veröffentlichungstag der Anmeldung:
06.03.91 Patentblatt 91/10

(84) Benannte Vertragsstaaten:
**AT BE DE FR GB IT NL SE**

(71) Anmelder: **GOSUDARSTVENNY PROETKNY I NAUCHNO-ISSLEDOVATELSKY INSTITUT NIKELEVO-KOBALTOVOI PROMYSHLENNOSTI (GIPRONIKEL)**
Nevsky pr. 30
Leningrad, 191011(SU)

(72) Erfinder: **GOMOJUNOV, Leonid Mikhailovich**
ul. Belorechenskaya, 7-327
Sverdlovsk, 620086(SU)
Erfinder: **SLOVIKOVSKY, Valentin Valerianovich**
ul. Turgeneva, 30-28
Sverdlovsk, 620151(SU)

Erfinder: **ROZHIN, Jury Igorevich**
ul. Chernoyarskaya, 30/2-60
Sverdlovsk, 620098(SU)
Erfinder: **EZHOV, Evgeny Ivanovich**
ul. Nekrasova, 8-14
Leningrad, 192104(SU)
Erfinder: **RYZHOV, Oleg Alexandrovich**
Krasnoputilovskaya ul., 91-35
Leningrad, 196247(SU)
Erfinder: **DUDNIKOV, Valery Nikolaevich**
Severny pr., 6-1-464
Leningrad, 194354(SU)
Erfinder: **SENNIKOV, Sergei Georgievich**
ul. Zhaka Djuklo, 14-5
Leningrad, 194223(SU)

(74) Vertreter: **Nix, Frank Arnold, Dr.**
Kröckelbergstrasse 15
W-6200 Wiesbaden(DE)

(54) **GUNITMASSE.**

(57) Die Torkretmasse enthält Chrommagnesit, Pechkoks und Quarzit bei folgendem Komponentenverhältnis:
20 bis 25 Gewichtsprozent Pechkoks
20 bis 30 Gewichtsprozent Quarzit
Rest Chrommagnesit

EP 0 414 897 A1

## TORKRETMASSE

Gebiet der Technik

Die Erfindung bezieht sich auf feuerfeste Werkstoffe und insbesondere auf Torkretmassen zur Heißreparatur der Auskleidung von metallurgischen Aggregaten nach dem Verfahren des Flammentorkretierens. Am vorteilhaftesten kann die Erfindung in der Nichteisenmetallurgie zur Futterreparatur von Konverterbirnen und Trommelkonvertern, Lichtbogenelektroöfen zum Schmelzen der Anoden von Nichteisenmetallen und anderen Aggregaten verwendet werden, deren Auskleidung einer intensiven Durchblasung der Schmelze und hohen lokalen Wärmebelastungen ausgesetzt ist.

Vorhergehender Stand der Technik

Die bekannten Torkretmassen zur Heißreparatur metallurgischer Aggregate nach dem Verfahren des Flammentorkretierens werden vorwiegend in der Eisenmetallurgie verwendet, weil die Sintertemperatur dieser Torkretmassen der Temperatur der technologischen Prozesse in Aggregaten der Eisenmetallurgie entspricht. In Aggregaten der Nichteisenmetallurgie ist die Temperatur der technologischen Prozesse und folglich die Futtertemperatur des Aggregats um 200 bis 300 $^\circ$C niedriger als in Aggregaten der Eisenmetallurgie. Für ein Flammentorkretieren der Auskleidung in Aggregaten der Nichteisenmetallurgie ist es erforderlich, daß die Sintertemperatur der Torkretmasse unter Berücksichtigung der Temperaturbedingungen in Aggregaten der Nichteisenmetallurgie unter Beibehaltung der mechanischen Festigkeit des aufgetragenen Torkretüberzugs gesenkt wird.

Es ist eine pulverförmige Mischung zum Wärmespritzen auf Metallteile bekannt, enthaltend

40 bis 50 Gewichtsprozent $Cr_2O_3$

1 bis 10 Gewichtsprozent $MgO$

2 bis 10 Gewichtsprozent $Fe_2O_3$

1 bis 10 Gewichtsprozent $TiO_2$

5 bis 40 Gewichtsprozent $Al_2O_3$

1,2 bis 8 Gewichtsprozent $SiO_2$

(US, A, 4141743)

Diese Mischung wird vorwiegend zum Wärmespritzen auf Metallteile zu ihrem Schutz vor Korrosionsverschleiß beim Einsatz bei Temperaturen nicht über 200 $^\circ$C verwendet. Die Sintertemperatur der Mischung beträgt 1250 bis 1400 $^\circ$C und bei den angegebenen Betriebstemperaturen der Erzeugnisse bleibt der Überzug ausreichend fest.

Es ist aber unzweckmäßig, solche Mischungen zum Auftragen der Torkretüberzüge in Aggregaten der Nichteisenmetallurgie anzuwenden, wo die Temperaturen der technologischen Prozesse 1200 $^\circ$C überschreiten, weil die Sintertemperatur dieser Überzüge von 1250 bis 1400 $^\circ$C nahe der Temperatur des technologischen Prozesses in Aggregaten der Ni-chteisenmetallurgie liegt, wodurch derartige Überzüge eine sehr niedrige Haltbarkeit aufweisen.

Es ist eine Torkretmasse zur Heißreparatur von Sauerstoff-Blaskonvertern bekannt, enthaltend

10 bis 30 Gewichtsprozent Pechkoks

4 bis 15 Gewichtsprozent Gichtstaub

Rest feuerfester Werkstoff.

(SU, A, 1031950).

Als feuerfester Stoff können in dieser Torkretmasse Chrommagnesit, Magnesitchromit, Periklas verwendet werden.

Die Sintertemperatur dieser Torkretmasse, die durch den Schmelzpunkt der Bindemittel, des Gichtstaubs und teilweise des Pechkokses bestimmt wird, beträgt ca.2000 $^\circ$C, wodurch man diese Torkretmasse zum Ausfüttern der Wärmeaggregate in der Eisenmetallurgie mit Erfolg anwendet, wo sich die Temperatur eines technologischen Prozesses von 1700 bis 1800 $^\circ$C der besagten Sintertemperatur der Torkretmasse nähert.

Die besagte Torkretmasse ist aber zum Einsatz in der Nichteisenmetallurgie, bei Temperaturen der technologischen Prozesse von 1300 bis 1400 $^\circ$C ungeeignet, weil infolge hoher Sintertemperatur der besagten Torkretmasse von ca.2000 $^\circ$C ihre Partikeln bei der angegebenen Temperatur in Aggregaten der Nichteisenmetallurgie in einem schlecht gesinterten Zustand vorliegen. Deshalb hat der dabei erzielte Torkretüberzug eine hohe Porosität, die eine niedrige mecha nische Biege-und Abscherfestigkeit dieses

2

Überzugs bedingt. Eine hohe Porosität des Überzugs bewirkt sein Ab-blättern, was einen zusätzlichen Verbrauch an Torkretmasse herbeiführt.

Offenbarung der Erfindung

Der Erfindung liegt die Aufgabe zugrunde, eine Torkretmasse zu schaffen, die solche Komponenten und in solchen Verhältnissen enthält, daß man die Sintertemperatur dieser Torkretmasse herabsetzen kann, wodurch die Biege- und Abscherfestigkeit eines Torkretüberzugs gesteigert und als Folge davon der Verbrauch an Torkretmasse vermindert sein können.

Diese Aufgabe wird dadurch gelöst, daß eine Torkretmasse, enthaltend Chrommagnesit und Pechkoks, erfindungsgemäß zusätzlich Quarzit bei dem folgenden Komponentenverhältnis enthält.

20 bis 25 Gewichtsprozent Pechkoks

20 bis 30 Gewichtsprozent Quarzit

Rest Chrommagnesit

Die Erfinder stellten in Versuchen fest, daß der in der Torkretmasse enthaltene Quarzit die Sintertemperatur der Torkretmasse herabsetzt. Dies ist dadurch bedingt, daß Quarzit bis 70% der niedrigschmelzenden Komponente Siliziumdioxid $SiO_2$ enthält. Dadurch wird der Gesamtgehalt an niedrigschmelzenden Komponenten in der Torkretmasse gesteigert und solch ein Verhältnis der niedrigschmelzenden Komponenten, und zwar Siliziumdioxid $SiO_2$ und Aluminiumoxid $Al_2O_3$, das vorwiegend in der Pechkoksschlacke enthalten ist, untereinander und in der gesamten Zusammensetzung der Torkretmasse eingestellt, daß dadurch die Sintertemperatur der Torkretmasse herabgesetzt und infolgedessen die mechanische Biege- und Abscherfestigkeit des Torkretüberzugs gesteigert werden.

Wenn der Gehalt der Torkretmasse an Pechkoks, der einen Brennstoff im Torkretflammenstrahl darstellt, unter 20% gesenkt wird, wird die Menge des niedrigschmelzenden Aluminiumoxids $Al_2O_3$ in der Torkretmasse vermindert und dies bedingt eine starke Steigerung der Sintertemperatur des Torkretüberzugs. Die Folge davon kann außerdem ein unzureichendes Sintern des Torkretüberzugs sein, weil wegen des Brennstoffmangels die Temperatur des Brennstoffflammenstrahls sinkt. Ein Gehalt an Pechkoks in der Torketmasse über 25% bewirkt einen gesteigerten Brennstoffverbrauch zum Sintern des Torkretüberzugs.

Bei einem Gehalt an Quarzit in der Torkretmasse unter 20% nimmt der Anteil an der hochschmelzenden Komponente Chrommagnesit in der Gesamtmasse zu, was die Steigerung der Sintertemperatur der Torkretmasse bewirkt und dies führt zum Abprallen der Torkretpartikeln von der Futteroberfläche beim Torkretieren und folglich zum gesteigerten Verbrauch an Torkretmasse.

Bei einem Gehalt an Quarzit über 30% nimmt die Sintertemperatur der Torkretmasse stark ab und nähert sich der Betriebstemperatur der Aggregate in der Nichteisenmetallurgie von 1300 bis 1400 °C, wodurch die Beständigkeit der erhaltenen Torkretüberzüge gesenkt und deren Lebensdauer verkürzt werden.

Beste Ausführungsvariante der Erfindung

Man bereitet eine Torkretmasse wie folgt auf. 20 bis 25% Pechkoks vermischt man mit 20 bis 30% Quarzit und 60 bis 45% Chrommagnesit und zerkleinert durch gemeinsame Mahlung bis auf eine Korngröße von 0.08 mm. Dabei kann man sich einer beliebigen Ausrüstung zur Trockenmahlung, z.B. Kugel- bzw. Stabmühlen bedienen. Die zerkleinerte Masse zieht Wasser an und ist darum in geschlossenen Behältern aufzubewahren.

In der nachstehenden Tabelle sind die Zusammensetzung einer bekannten Torkretmasse, drei Zusammensetzungen der erfindungsgemäßen Torkretmasse und zwei Zusammensetzungen, die eine Unter- bzw. Überschreitung der erfindungsgemäßen Grenzwerte darstellen, sowie Zahlenwerte der Parameter enthalten, die die Effektivität der Anwendung dieser Torkretmassen kennzeichnen.

Aus der Tabelle ist es ersichtlich, daß das Vorhandensein von Quarzit in einer erfindungsgemäßen Torkretmasse an stelle von Gichtstaub alle Kennwerte der Eigenschaften der Torkretmasse und des mit deren Hilfe erhaltenen Torkretüberzugs stark verbessern läßt.

| Kennwert | Maßein- heit | bekann- te Tork- retmas- se | erfindungsgemäße Torkretmasse | | | | |
|---|---|---|---|---|---|---|---|
| | | | 1 | 2 | 3 | 4 | 5 |
| 1. Zusammensetzung der Torkretmasse | Gew.% | | | | | | |
| Pechkoks | | 20 | 20 | 22 | 25 | 19 | 26 |
| Gichtstaub | | 10 | – | – | – | – | – |
| Quarzit | | – | 30 | 25 | 20 | 19 | 31 |
| Chrommagnesit | | 70 | 50 | 53 | 55 | 62 | 43 |
| 2. Biegefestigkeit | MPa | 4,3 | 8,6 | 9,8 | 9,3 | 3,7 | 3,1 |
| 3. Scherfestigkeit | MPa | 1,10 | 3,65 | 4,11 | 3,63 | 1,05 | 1,8 |
| 4. Sintertemperatur | °C | 1800 | 1400 | 1500 | 1400 | 1450 | 1450 |
| 5. Torkretierdauer | s | 60 | 30 | 22 | 25 | 55 | 45 |
| 6. Torkretmasse- verbrauch | g/s | 130 | 50 | 40 | 45 | 110 | 80 |

Industrielle Anwendbarkeit

Am vorteilhaftesten kann die Erfindung in der Nichteisenmetallurgie zur Futterreparatur von Konverterbirnen, Trommelkonvertern, Anodenöfen, Elektroöfen und anderen Aggregaten verwendet werden, deren Futter einer intensiven Durchblasung der Schmelze und hohen lokalen Wärmebelastungen ausgesetzt ist.

**Ansprüche**

Torkretmasse, enthaltend Chrommagnesit und Pechkoks, **dadurch gekennzeichnet,** daß sie zusätzlich Quarzit bei folgendem Komponentenverhältnis enthält:
20 bis 25 Gewichtsprozent Pechkoks
20 bis 30 Gewichtsprozent Quarzit
Rest Chrommagnesit

# INTERNATIONAL SEARCH REPORT

International Application No PCT/SU89/00060

## I. CLASSIFICATION OF SUBJECT MATTER (if several classification symbols apply, indicate all) [6]

According to International Patent Classification (IPC) or to both National Classification and IPC

$IPC^5$: C04B 35/02, C04B 35/68

## II. FIELDS SEARCHED

### Minimum Documentation Searched [7]

| Classification System | Classification Symbols |
|---|---|
| $IPC^4$ | C04B 35/02, 35/04, 35/42, C04B 35/66 - 35/68 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, AI, 5861461 (Dnepropetrovsky metallurgichesky zavod im. F. E. Dzerzhinskogo) 27 December 1977 (27.12.77), the claims | 1 |
| A | US, A, 4298391 (Shinagawa Refractories Co, Ltd), 3 November 1981 (03.11.81), the claims & GB, 2049652 FR, 2454429 DE, 3010810 JP, 61028630 | 1 |
| A | DE, B2, 2553084 (Kurosaki Yogyo Co, Ltd) 28 August 1980 (28.08.80), the claims & JP, 56004514 | 1 |
| A | DE, B2, 2638458 (Magnesital - Feuerfest GmbH), 24 August 1978 (24.08.78), the claims | 1 |

./.

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 30 October 1989 (30.10.89) | 17 November 1989 (17.11.89) |

| International Searching Authority | Signature of Authorized Officer |
|---|---|
| ISA/SU | |

Form PCT/ISA/210 (second sheet) (January 1985)

| III. DOCUMENTS CONSIDERED TO BE RELEVANT (CONTINUED FROM THE SECOND SHEET) | | |
|---|---|---|
| Category* | Citation of Document, with indication, where appropriate, of the relevant passages | Relevant to Claim No |
| A | DD, AI, 250927 (VEB Magnesitwerk Aken), 28 October 1987 (28.10.87), the claims | 1 |

Form PCT/ISA/210 (extra sheet) (January 1985)